Europäisches Patentamt

European Patent Office

Office européen des brevets

(19)

(11) Veröffentlichungsnummer : **0 230 525 B1**

(12) # EUROPÄISCHE PATENTSCHRIFT

(45) Veröffentlichungstag der Patentschrift :
**11.01.89**

(21) Anmeldenummer : **86114665.2**

(22) Anmeldetag : **24.10.86**

(51) Int. Cl.⁴ : **B 60 K 5/12**, B 60 K 5/02, B 62 D 21/18

(54) **Antrieb für einen landwirtschaftlich nutzbaren Schlepper.**

(30) Priorität : **25.10.85 DE 3537984**

(43) Veröffentlichungstag der Anmeldung :
**05.08.87 Patentblatt 87/32**

(45) Bekanntmachung des Hinweises auf die Patenterteilung : **11.01.89 Patentblatt 89/02**

(84) Benannte Vertragsstaaten :
**DE FR GB IT**

(56) Entgegenhaltungen :
**CH-A- 207 629**
**CH-A- 212 767**

(73) Patentinhaber : **Xaver Fendt & Co.**
**Johann-Georg-Fendt-Strasse 4**
**D-8952 Marktoberdorf (DE)**

(72) Erfinder : **Rathke, Gerd**
**Bischof-Ketteler-Strasse 12**
**D-8952 Marktoberdorf (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft einen Antrieb für einen landwirtschaftlich nutzbaren Schlepper nach dem Oberbegriff des Patentanspruches 1.

In Blockbauweise ausgeführte Schlepperantriebe zeichnen sich dadurch aus, daß der Antriebsmotor mit dem Getriebegehäuse zu einer Baueinheit zusammengeschraubt ist. Damit ist das Kurbelgehäuse des Antriebsmotors nicht unwesentlich an der Aufnahme von über die Vorderachse eingeleiteten Biege- und Torsionsmomenten beteiligt. Herkömmliche Motoren, wie sie für PKW's und LKW's in großer Stückzahl benötigt werden, sind wegen ihrer leichten Bauweise für diesen Zweck völlig ungeeignet. Aus diesem Grund werden bei Antrieben der eingangs beschriebenen Gattung nur sogenannte Blockmotoren eingesetzt, die entsprechend der erwarteten höheren Belastung massiver gebaut sind. Mit zunehmender Schleppergröße steigt die Beanspruchung des Kurbelgehäuses insbesondere aufgrund der auftretenden Torsionsmomente jedoch so stark an, daß weitere Maßnahmen ergriffen werden müssen, um zumindest einen Teil der Torsionsmomente am Kurbelgehäuse vorbei in das Getriebegehäuse einzuleiten. Hierzu ist ein Hilfsrahmen bekannt geworden, der sich mit zwei im Abstand voneinander angeordneten Tragelementen vom Getriebegehäuse aus seitlich am Antriebsmotor vorbei erstreckt und über eine Platte stirnseitig mit dem Antriebsmotor lösbar verbunden ist.

Zur Realisierung der Tragelememte sind in der Regel U-förmige Schienen vorgesehen, die jedoch, sollen sie das Kurbelgehäuse wirksam entlasten, relativ große Abmessungen aufweisen müssen. Diese Abmessungen gehen aber nicht nur in den Preis und das Gewicht des Schleppers ein ; sie machen sich auch wegen des die Breite des Antriebsmotors selbst wesentlich übersteigenden seitlichen Platzbedarfs des Antriebes insbesondere bei Schleppern, die mit einer angetriebenen Vorderachse und somit mit relativ großen Vorderrädern ausgerüstet sind, durch eine starke Einschränkung des maximalen Lenkeinschlagwinkels der Vorderräder nachteilig bemerkbar.

Bei den bekannten Antrieben dieser Art führt ferner unterhalb des Antriebsmotors eine Antriebswelle — in der Regel eine Gelenkwelle — vom Getriebegehäuse zur Vorderachse. Hier ist es notwendig, diese Antriebswelle gesondert zu schützen, damit sich nicht Gras und dergleichen längere Gewächse auf die sich drehende Antriebswelle aufwickeln kann.

Aufgabe der Erfindung ist es, einen Antrieb der eingangs beschriebenen Art so auszubilden, daß ein möglichst großer maximaler Lenkeinschlagwinkel zur Verfügung steht und gleichzeitig eine noch größere Entlastung des Kurbelgehäuses gegeben ist.

Die Lösung dieser Aufgabe ist im Kennzeichen des Hauptanspruches beschrieben. Durch die erfindungsgemäße Anordnung und Ausbildung ist das Tragelement nunmehr bei geringerem Bauaufwand in der Lage, noch höhere Torsionsmomente zu übertragen, so daß Schlepper auch mit leichter gebauten Fahrzeugmotoren ausgerüstet werden können. Über die normale Tragfunktion hinaus übernimmt das Tragelement zusätzlich eine Schutzfunktion durch die zum einen die Gelenke der Gelenkwelle vor Beschädigungen geschützt sind und zum anderen verhindert wird, daß sich Gras etc. auf die sich drehende Gelenkwelle aufwickeln kann.

Die Erfindung wird im folgenden anhand eines Ausführungsbeispieles näher beschrieben. Es zeigt :

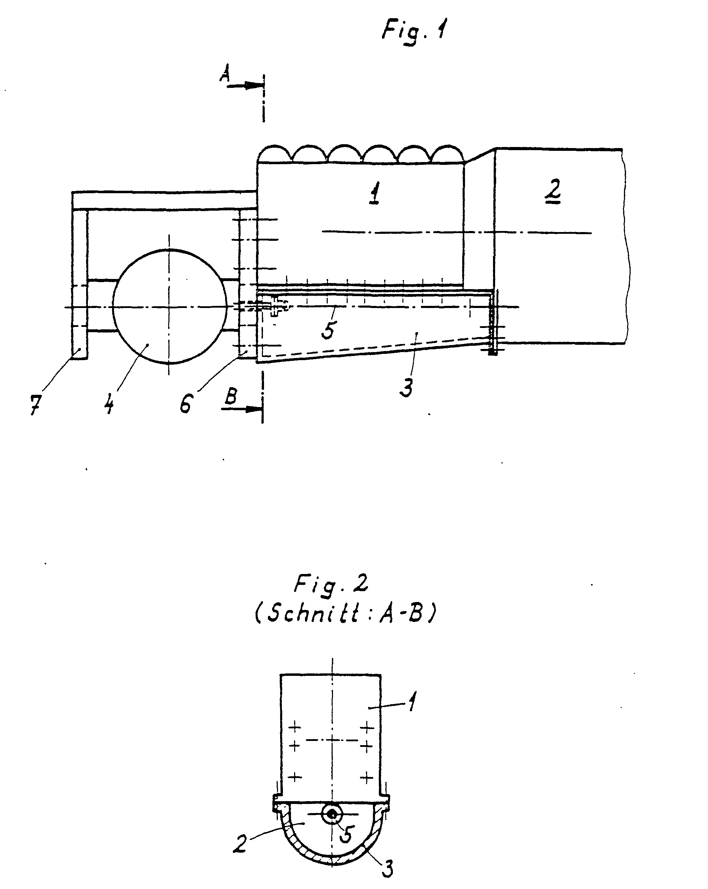

Fig. 1 eine Seitenansicht des Antriebes eines landwirtschaftlichen Schleppers und

Fig. 2 eine Ansicht nach der Linie A-B in Fig. 1.

Der erfindungsgemäße Antrieb besteht aus einem Antriebsmotor 1, dem damit verschraubten Getriebegehäuse 2 und einem wannenförmigen Tragelement 3, das mit seiner Öffnungsseite von unten an den Antriebsmotor 1 und das Getriebegehäuse 2 angeschraubt ist. Das Tragelement 3 ist im Querschnitt halbkreisförmig ausgebildet und annähernd koaxial zur Mitte der Vorderachse 4 angeordnet, die sich vor dem Antrieb befindet. Die Erstreckung des Tragelementes 3 nach unten ergibt sich zum einen aus der Forderung nach einer ausreichenden Bodenfreiheit und zum anderen aus dem Platzbedarf, den die vom Getriebegehäuse 2 zur Vorderachse 4 führende Gelenkwelle 5 aufweist. An der Vorderseite ist der Antriebsmotor 1 und das Tragelement 3 über eine Platte 6 miteinander verschraubt. Zusammen mit einer im Abstand in Fahrtrichtung davor angeordneten Platte 7 dient die Platte 6 als Lagerbock für die zwischen ihnen angeordnete Vorderachse 4.

## Patentansprüche

1. Antrieb für einen landwirtschaftlich nutzbaren Schlepper, insbesondere mit mittigem Antrieb der Vorderachse über eine Antriebswelle, bestehend aus einem Getriebe, einem mit dem Getriebegehäuse lösbar verbundenen Antriebsmotor und einem Tragelement, das sich vom Getriebe aus am Antriebsmotor vorbei bis zu einer Platte erstreckt, die das Tragelement mit dem Antriebsmotor verbindet, dadurch gekennzeichnet, daß das Tragelement (3) als unterhalb des Antriebsmotors (1) angeordneter, nach unten geschlossener wannenförmiger Hohlkörper ausgebildet ist, der mit der Platte (6) und dem Antriebsmotor (1) lösbar verbunden ist, wobei die zur Vorderachse (4) führende Antriebswelle (Gelenkwelle (5)) innerhalb des Tragelements (3) verläuft.

2. Antrieb nach Anspruch 1, dadurch gekennzeichnet, daß das Tragelement (3) im Querschnitt halbkreisförmig ist.

## Claims

1. A drive for an agriculturally usable tractor, more especially having central drive of the front axle by way of a driving shaft, consisting of a gear, a driving motor connected releasably to the gear housing, and a supporting element which extends from the gear past the driving motor as far as a plate which connects the supporting element to the driving motor, characterised in that the supporting element (3) is designed as a downwardly-closed trough-shaped hollow body which is arranged underneath the driving motor (1) and which is connected releasably to the plate (6) and the driving motor (1), in which respect the driving shaft (Carden shaft (5)) which leads to the front axle (4) extends inside the supporting element (3).

2. A drive according to claim 1, characterised in that the supporting element (3) is semicircular in cross-section.

**Revendications**

1. Entraînement pour un tracteur à usage agricole, en particulier avec un entraînement central de l'essieu avant par un arbre d'entraînement, se composant d'une boîte de vitesses, d'un moteur d'entraînement relié de manière susceptible d'être désaccouplée au carter de boîte de vitesse et un élément support, qui s'étend de la boîte de vitesses, en passant par le moteur d'entraînement et en allant jusqu'à une plaque, qui relie l'élément support au moteur d'entraînement, caractérisé en ce que l'élément support (3) est réalisé sous forme de corps creux, en forme de bras, fermé vers le bas, disposé au-dessous du moteur d'entraînement (1), qui est relié de manière démontable à la plaque (6) et au moteur d'entraînement (1), l'arbre d'entraînement (arbre articulé) (5) menant à l'essieu avant (4) se développant à cette occasion à l'intérieur de l'élément support (3).

2. Entraînement selon la revendication 1, caractérisé en ce que l'élément support (3) présente une section en forme de demi-cercle.

Fig. 1

A

1    2

5

7    4    6    B    3

Fig. 2
(Schnitt : A-B)

1

2    5

3